# FASCICULE DE BREVET EUROPEEN

(11) **EP 3 752 376 B1**
(45) Date de publication et mention de la délivrance du brevet: **12.01.2022**
(21) Numéro de dépôt: 19742809.7
(22) Date de dépôt: 04.02.2019
(51) Int. Cl.: B60G 15/06

(54) **SYSTEME DE BUTÉE SUPÉRIEURE À BILLES D'UNE SUSPENSION DE TRAIN AVANT D'UN VÉHICULE**
OBERES KUGELLAGERANSCHLAGSYSTEM FÜR AUFHÄNGUNG EINER FAHRZEUGFRONTANORDNUNG EINES KRAFTFAHRZEUGES
TOP THRUST BALL BEARING SYSTEM OF A MOTOR VEHICLE FRONT END ASSEMBLY SUSPENSION

(30) Priorité: 12.02.2018 FR 1851144
(43) Date de publication de la demande: 23.12.2020
(73) Titulaire: PSA Automobiles SA, 78300 Poissy (FR)
(72) Inventeur: LE COSQUER, Yannick, 25350 MANDEURE (FR); ROUSSEY, Philippe, 25150 PONT DE ROIDE - VERMONDANS (FR); VALLET, Julien, 74960 CRAN-GEVRIER (FR); PREMARTIN, Arnaud, 44470 MAUVES SUR LOIRE (FR)
(86) Numéro de dépôt international: PCT/FR2019/050238
(87) Numéro de publication internationale: WO 2019/155149

(56) Documents cités:
- EP-A1- 2 529 960
- DE-A1-102011 089 000
- FR-A1- 2 962 069
- US-A1- 2007 170 684
- US-A1- 2016 243 915

## Description

La présente invention concerne un système de butée supérieure à billes d'amortisseur de suspension de véhicule automobile, ainsi qu'un véhicule automobile équipé d'un tel système de butée.

Un type connu de système de butée supérieure à billes de suspension de train avant d'un véhicule, présenté notamment par le document FR-A1-2962069, comporte un support formant une tôle fixée à la caisse du véhicule, comprenant en dessous un bloc élastique et une butée à billes disposés suivant un axe principal sensiblement vertical.

Le document US 2016/243915 A1 divulgue un système de butée supérieure selon le préambule de la revendication 1. Le document EP 2 529 960 A1 divulgue un autre système de butée supérieure.

Un amortisseur du type « MacPherson » comporte suivant son axe principal un corps dont la base est fixée à un triangle inférieur de suspension lié à un moyeu de roue, et une tige coulissante sortant sur le dessus, dont l'extrémité supérieure est fixée au bloc élastique pour filtrer des vibrations.

Un ressort hélicoïdal de suspension prend appui en haut sous la butée à billes et en bas sur une plaque inférieure fixée autour du corps de l'amortisseur, afin de permettre un débattement vertical du triangle de suspension en comprimant le ressort et en amortissant les mouvements.

Le pivotement du moyeu de roue sous l'effet de la commande de direction du véhicule, entraîne un pivotement équivalent de la base du ressort qui est transmis à sa partie supérieure. La butée à billes permet une libre rotation de l'extrémité supérieure du ressort sans présenter de frottement ce qui facilite les mouvements de la direction du véhicule, en évitant des efforts de pivotement qui entraîneraient un tirage de cette direction d'un côté ou de l'autre.

Toutefois sur certains véhicules le chemin de roulement d'une coupelle supérieure de la butée à billes n'est pas parallèle à son plan supérieur d'appui sur la caisse du véhicule afin de réaliser la géométrie de suspension souhaitée, ce qui nécessite un indexage de sa position angulaire par rapport à l'axe principal lors de son montage. Il faut alors prévoir lors de l'assemblage du véhicule le montage de pièces distinctes, le support fixé sur la caisse du véhicule et la butée fixée en-dessous de ce support, en faisant attention au positionnement angulaire de cette butée afin d'éviter des erreurs de géométrie du train avant.

Cette opération nécessite l'assemblage de deux pièces ce qui prend du temps sur une chaîne de montage en série du train roulant, et nécessite une surveillance particulière pour garantir son positionnement. En particulier une erreur de positionnement angulaire de la butée entraînant un mauvais positionnement de l'inclinaison de son chemin de roulement, peut causer un tirage de la direction du véhicule d'un côté ou de l'autre.

La présente invention a notamment pour but d'éviter ces inconvénients de la technique antérieure.

Elle propose à cet effet un système de butée supérieure d'une suspension de train avant d'un véhicule automobile disposée suivant un axe principal, comportant un support de liaison avec la caisse du véhicule, et une butée d'appui axial à billes venant sous ce support, comprenant une coupelle supérieure s'ajustant dans un centrage de ce support, présentant un chemin de roulement des billes inclinés par rapport à un plan transversal, et une coupelle inférieure disposée sous ces billes, le système de butée supérieure comportant un dispositif de clipsage de la coupelle supérieure sous le support, remarquable en ce qu'il comprend un indexage de la position angulaire de cette coupelle supérieure autour de l'axe principal.

Un avantage de ce système de butée est que de manière simple et économique, grâce au dispositif de clipsage on peut chez un fournisseur fixer la butée sous le support ce qui permet ensuite de manipuler et d'installer sur le train avant du véhicule un unique ensemble garantissant la bonne position de cette butée grâce à l'indexage de la position angulaire. De cette manière on gagne du temps sur la ligne de montage du train avant, et on supprime un risque d'erreur.

Le système de butée suivant l'invention peut de plus comporter une ou plusieurs des caractéristiques suivantes, qui peuvent être combinées entre elles.

Avantageusement, le support comporte une patte d'accrochage tournée vers le bas, faisant partie du dispositif de clipsage comprenant un indexage.

Dans ce cas, avantageusement la patte d'accrochage s'ajuste tangentiellement dans une encoche de la coupelle supérieure pour réaliser l'indexage de la position angulaire.

De plus, avantageusement le contour radialement extérieur de la coupelle supérieure comporte une première patte flexible tournée vers le haut, comprenant à son extrémité un crochet qui dans la position de montage s'engage dans une fenêtre découpée dans la patte d'accrochage.

Avantageusement, le dispositif de clipsage comprenant un indexage est disposé sur le contour radialement extérieur de la coupelle supérieure.

Avantageusement, le support comporte une tôle supérieure et une tôle inférieure assemblées entre elles.

Dans ce cas, avantageusement, la tôle inférieure du support comporte une forme cylindrique axiale s'ajustant dans une forme complémentaire de la coupelle supérieure pour former le centrage.

En particulier, la forme cylindrique axiale de la tôle inférieure peut comporter un creux recevant l'accrochage d'un crochet formé sur une deuxième patte flexible de la coupelle supérieure.

Avantageusement, le système de butée comporte un dispositif de clipsage de la coupelle supérieure qui est disposé radialement à l'extérieur de la butée, permettant de visualiser de l'extérieur la fin du clipsage.

L'invention a aussi pour objet un véhicule automobile équipé de butées supérieures à billes des suspensions de train avant, chaque butée supérieure faisant partie d'un système de butée comprenant l'une quelconque des caractéristique précédentes.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est une vue en coupe axiale de la partie supérieure d'un amortisseur comprenant un système de butée selon l'invention ;
- la figure 2 est une vue en coupe axiale du support et de la butée disposée sous ce support, de ce système de butée ;
- la figure 3 est une vue de détail d'un premier dispositif de clipsage de la butée réalisant l'indexage de sa position angulaire ; et
- les figures 4, 5 et 6 sont des vues du deuxième dispositif de clipsage de la butée, présenté successivement sur l'ensemble en coupe axiale, sur le support en vue de dessous et sur la butée en vue de dessus.

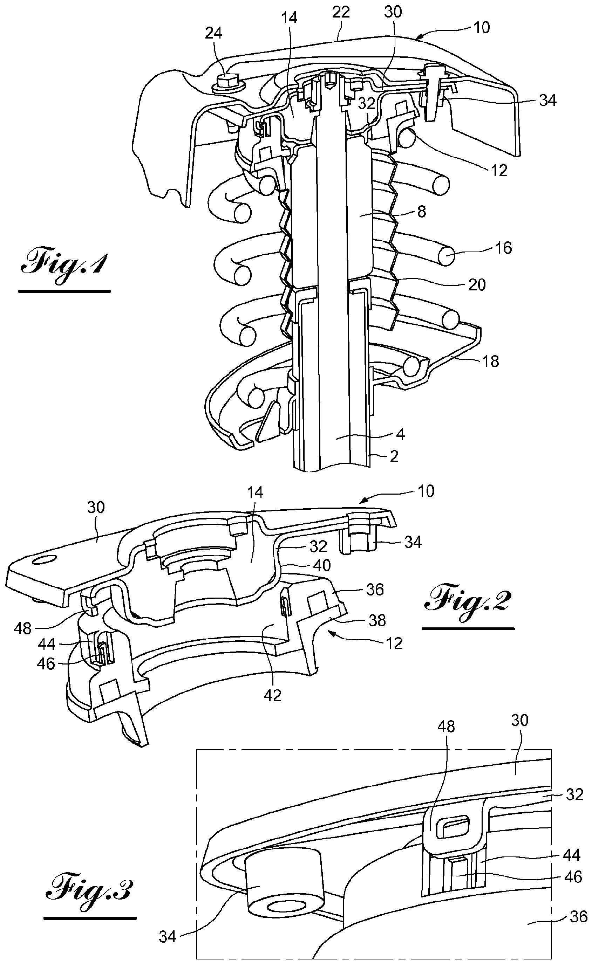

Les figures 1, 2 et 3 présentent un corps d'amortisseur 2 comprenant une tige coulissant axialement 4 suivant un axe principal, entourée au-dessus de ce corps par une butée de fin de course en élastomère 8.

Un système de butée supérieure de l'amortisseur comporte un support 10 comprenant une tôle supérieure 30 et une tôle inférieure 32 reliées ensemble, qui est fixé en-dessous d'une tôle d'un passage de roue 22 de la caisse du véhicule par des vis 24 venant par au-dessus, et se vissant dans un bossage taraudé 34 de la tôle inférieure.

Un bloc en élastomère 14 circulaire disposé suivant l'axe principal, serré entre la tôle supérieure 30 et la tôle inférieure 32, comporte un perçage axial recevant l'extrémité supérieure de la tige de l'amortisseur 4 pour la relier à la caisse du véhicule en filtrant des vibrations. Lors d'une remontée importante du corps de l'amortisseur 2, son extrémité supérieure comprime la butée de fin de course 8 qui prend appui sous la tôle inférieure 32 du support 10.

Un ressort hélicoïdal de suspension 16 comporte une extrémité inférieure prenant appui sur une plaque inférieure 18 fixée au corps de l'amortisseur 2, et une extrémité supérieure prenant appui sous une butée à billes 12. Une gaine de protection 20 entoure la tige de l'amortisseur 4 et la butée 8 pour les protéger contre des projections.

La butée à billes 12 comporte une rangée de billes disposée transversalement entre une coupelle supérieure 36 et une coupelle inférieure 38, pour transmettre l'effort de compression du ressort de suspension 16 à la caisse du véhicule tout en permettant sa rotation autour de l'axe principal sous l'effet des mouvements de la direction entraînant un pivotement du corps de l'amortisseur 2 autour de son axe.

La coupelle supérieure 36 comporte une face d'appui supérieure transversale plate prenant appui sous la tôle inférieure 32 du support 10, et une face intérieure cylindrique de centrage 42 ajustée autour d'une surface extérieure cylindrique de centrage 40 correspondante formée sur cette tôle inférieure autour du bloc en élastomère 14. La coupelle inférieure 38 comporte une face inférieure circulaire présentant une surface transversale plane d'appui de l'extrémité du ressort de suspension 16, qui se prolonge vers l'axe par un rebord descendant permettant un centrage de cette extrémité.

La coupelle supérieure 36 comporte un chemin de roulement des billes qui présente une petite pente par rapport au plan transversal de l'axe principal, d'environ 7°, assurant une bonne géométrie pour le fonctionnement du ressort de suspension 16. La position angulaire de la coupelle supérieure 36 autour de l'axe est alors importante pour assurer le bon positionnement de cet angle par rapport au véhicule.

Le contour radialement extérieur de la coupelle supérieure 36 présentant une forme globalement cylindrique centrée sur l'axe principal, comporte dans une position angulaire précise par rapport à la pente du chemin de roulement une première encoche 44 débouchant vers le haut, comprenant au milieu une première patte flexible 46 tournée vers le haut, disposant à son extrémité supérieure d'un crochet tourné vers l'extérieur.

Le contour de la tôle inférieure 32 du support 10 présente radialement vers l'extérieur, après une partie transversale plate recevant l'appui de la face supérieure de la butée à billes 12, une patte d'accrochage 48 tournée vers le bas, comprenant une largeur s'ajustant sur la largeur de l'encoche 44 pour réaliser un indexage angulaire de la coupelle supérieure 36.

La patte d'accrochage 48 comporte une fenêtre horizontale qui en fin de course axiale de montage de la butée 12 sous le support 10, permet un encliquetage du crochet supérieur de la première patte flexible 46 afin d'assurer un verrouillage axial de cette butée.

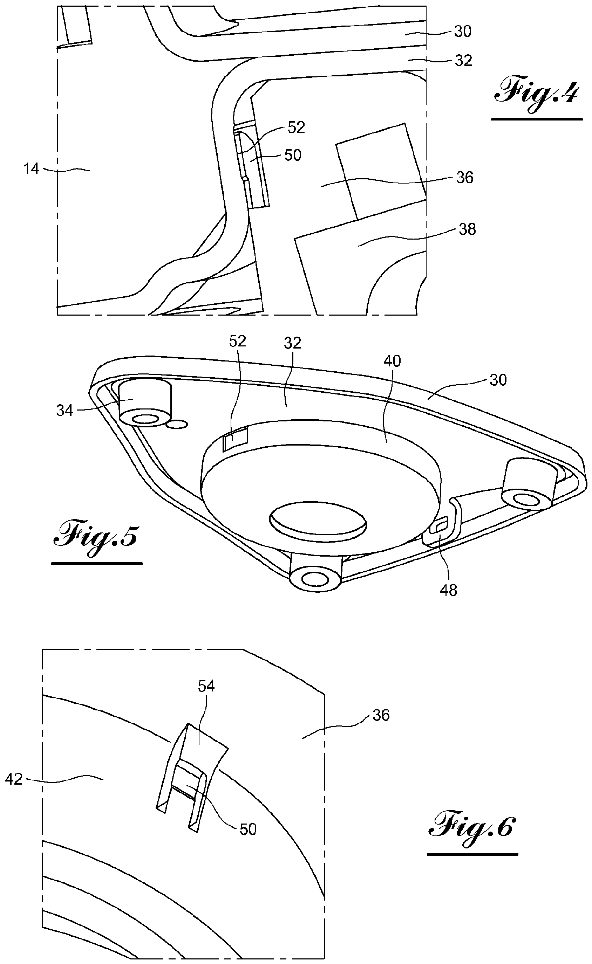

Les figures 4, 5, et 6 présentent dans une position diamétralement opposée à la première patte flexible 46, une deuxième patte flexible 50 disposée au milieu d'une deuxième encoche 54 débouchant vers le haut, formée sur la face cylindrique intérieure de centrage 42 de la coupelle supérieure 36, disposant à son extrémité supérieure d'un crochet tourné vers l'intérieur.

Un creux 52 présentant une faible profondeur et un contour rectangulaire, est formé sur la surface extérieure de centrage 40 de la tôle inférieure 32. En fin de course de montage de la butée 12 sous le support 10, le crochet supérieur de la deuxième patte flexible 50 descend dans le creux 52 pour assurer aussi un verrouillage axial de cette butée.

On obtient après l'assemblage simple et rapide, réalisé en pressant axialement le support 10 sur la butée 12 après avoir ajusté la position angulaire de ce support par rapport à la coupelle supérieure 36, une fixation de ces deux éléments pour former un sous-ensemble facile à manipuler et à installer dans le véhicule.

On notera que l'emboîtement complet du support 10 sur la butée 12 peut être facilement contrôlé visuellement en vérifiant que le crochet de la première patte flexible 46 est bien passé dans la fenêtre de la patte d'accrochage 48, alors que la deuxième patte flexible 50 n'est pas visible. Cette visibilité ajoute une sécurité supplémentaire pour garantir le montage.

## Revendications

1. Système de butée supérieure d'une suspension de train avant d'un véhicule automobile disposée suivant un axe principal, comportant un support (10) de liaison avec la caisse du véhicule, et une butée d'appui axial à billes (12) venant sous ce support (10), comprenant une coupelle supérieure (36) s'ajustant dans un centrage de ce support (10), présentant un chemin de roulement des billes inclinés par rapport à un plan transversal, et une coupelle inférieure (38) disposée sous ces billes, le système de butée supérieure comportant un dispositif de clipsage de la coupelle supérieure (36) sous le support (10), **caractérisé en ce qu'**il comprend un indexage de la position angulaire de cette coupelle supérieure (36) autour de l'axe principal.

2. Système de butée selon la revendication 1, **caractérisé en ce que** le support (10) comporte une patte d'accrochage (48) tournée vers le bas, faisant partie du dispositif de clipsage comprenant un indexage.

3. Système de butée selon la revendication 2, **caractérisé en ce que** la patte d'accrochage (48) s'ajuste tangentiellement dans une encoche (44) de la coupelle supérieure (36) pour réaliser l'indexage de la position angulaire.

4. Système de butée selon la revendication 2 ou 3, **caractérisé en ce que** le contour radialement extérieur de la coupelle supérieure (36) comporte une première patte flexible (46) tournée vers le haut, comprenant à son extrémité un crochet qui dans la position de montage s'engage dans une fenêtre découpée dans la patte d'accrochage (48).

5. Système de butée selon l'une quelconque des revendications précédentes, **caractérisé en ce que** le dispositif de clipsage comprenant un indexage est disposé sur le contour radialement extérieur de la coupelle supérieure (36).

6. Système de butée selon l'une quelconque des revendications précédentes, **caractérisé en ce que** le support (10) comporte une tôle supérieure (30) et une tôle inférieure (32) assemblées entre elles.

7. Système de butée selon la revendication 6, **caractérisé en ce que** la tôle inférieure (32) du support (10) comporte une forme cylindrique axiale (40) s'ajustant dans une forme complémentaire (42) de la coupelle supérieure (36) pour former le centrage.

8. Système de butée selon la revendication 7, **caractérisé en ce que** la forme cylindrique axiale (40) de la tôle inférieure (32) comporte un creux (52) recevant l'accrochage d'un crochet formé sur une deuxième patte flexible (50) de la coupelle supérieure (36).

9. Système de butée selon l'une quelconque des revendications précédentes, **caractérisé en ce qu'**il comporte un dispositif de clipsage de la coupelle supérieure (36) qui est disposé radialement à l'extérieur de la butée (12), permettant de visualiser de l'extérieur la fin du clipsage.

10. Véhicule automobile équipé de butées supérieures à billes (12) des suspensions de train avant, **caractérisé en ce que** chaque butée supérieure (12) fait partie d'un système de butée selon l'une quelconque des revendications précédentes.

## Patentansprüche

1. Oberes Anschlagsystem einer entlang einer Hauptachse angeordneten Vorderachsaufhängung eines Kraftfahrzeugs, umfassend einen Träger (10) zur Verbindung mit der Fahrzeugkarosserie und einen axialen Lageranschlag mit unter diesem Träger (10) liegenden Kugeln (12), umfassend eine in eine Zentrierung dieses Trägers (10) einpassende obere Pfanne (36), die eine gegenüber einer Querebene geneigte Laufbahn der Kugeln aufweist, und eine unter diesen Kugeln angeordnete untere Pfanne (38), wobei das obere Anschlagsystem eine Vorrichtung umfasst zum Einclipsen der Oberschale (36) unter den Träger (10), **dadurch gekennzeichnet, dass** es eine Indexierung der Winkelposition dieser Oberschale (36) um die Hauptachse umfasst.

2. Anschlagsystem nach Anspruch 1, **dadurch gekennzeichnet, dass** der Träger (10) eine nach unten gerichtete Hakenlasche (48) umfasst, die einen Teil der Clipvorrichtung mit einer Indexierung bildet.

3. Anschlagsystem nach Anspruch 2, **dadurch gekennzeichnet, dass** die Hakenlasche (48) tangential in eine Kerbe (44) der oberen Schale (36) eingreift, um die Indexierung der Winkelposition durchzuführen.

4. Anschlagsystem nach Anspruch 2 oder 3, **dadurch gekennzeichnet, daß** die radial äußere Kontur des Obertopfes (36) eine nach oben weisende erste flexible Lasche (46) aufweist, die an ihrem Ende einen Haken aufweist, der in Montagestellung in einen Fensterausschnitt eingreift in der Einhängelasche (48).

5. Anschlagsystem nach einem der vorhergehenden Ansprüche, **dadurch gekennzeichnet, dass** die eine Indexierung aufweisende Clipvorrichtung an der radial äußeren Kontur der Oberschale (36) angeordnet ist.

6. Anschlagsystem nach einem der vorhergehenden Ansprüche, **dadurch gekennzeichnet, dass** der Träger (10) eine obere Platte (30) und eine untere Platte (32) umfasst, die zusammengebaut sind.

7. Anschlagsystem nach Anspruch 6, **dadurch gekennzeichnet, dass** das untere Blech (32) des Trägers (10) eine axiale zylindrische Form (40) hat, die in eine komplementäre Form (42) des oberen Bechers (36) zur Bildung einer Zentrierung passt.

8. Anschlagsystem nach Anspruch 7, **dadurch gekennzeichnet, dass** die axiale zylindrische Form (40) des unteren Blechs (32) eine Vertiefung (52) umfasst, die die Befestigung eines Hakens aufnimmt, der an einer zweiten flexiblen Lasche (50) des oberen Bechers (36).

9. Anschlagsystem nach einem der vorhergehenden Ansprüche, **dadurch gekennzeichnet, dass** es eine radial außerhalb des Anschlags (12) angeordnete Vorrichtung zum Einklipsen des oberen Bechers (36) umfasst, die eine Sicht von außen auf das Ende des der Clip.

10. Kraftfahrzeug mit oberen Kugelanschlägen (12) für die Vorderachsaufhängungen, **dadurch gekennzeichnet, dass** jeder obere Anschlag (12) Teil eines Anschlagsystems nach einem der vorhergehenden Ansprüche ist.

## Claims

1. Upper stop system of a front axle suspension of a motor vehicle arranged along a main axis, comprising a support (10) for connection with the vehicle body, and an axial bearing stop with balls (12) coming under this support (10), comprising an upper cup (36) fitting in a centering of this support (10), having a raceway of the balls inclined with respect to a transverse plane, and a lower cup (38) arranged under these balls, the upper stop system comprising a device for clipping the upper cup (36) under the support (10), **characterized in that** it comprises an indexing of the angular position of this upper cup (36) around the main axis.

2. Stop system according to claim 1, **characterized in that** the support (10) comprises a hooking tab (48) turned downwards, forming part of the clipping device comprising an indexing.

3. Stop system according to claim 2, **characterized in that** the hooking tab (48) fits tangentially in a notch (44) of the upper cup (36) to perform the indexing of the angular position.

4. Stop system according to claim 2 or 3, **characterized in that** the radially outer contour of the upper cup (36) comprises a first flexible tab (46) facing upwards, comprising at its end a hook which in the mounting position engages in a window cut in the hooking tab (48).

5. Stop system according to any one of the preceding claims, **characterized in that** the clipping device comprising an indexing device is arranged on the radially outer contour of the upper cup (36).

6. Stop system according to any one of the preceding claims, **characterized in that** the support (10) comprises an upper sheet (30) and a lower sheet (32) assembled together.

7. Stop system according to claim 6, **characterized in that** the lower sheet (32) of the support (10) has an axial cylindrical shape (40) fitting into a complementary shape (42) of the upper cup (36) to form centering.

8. Stop system according to claim 7, **characterized in that** the axial cylindrical shape (40) of the lower sheet (32) comprises a hollow (52) receiving the attachment of a hook formed on a second flexible tab (50) of the upper cup (36).

9. Stop system according to any one of the preceding claims, **characterized in that** it comprises a device for clipping the upper cup (36) which is disposed radially outside the stop (12), making it possible to view the outside the end of the clipping.

10. Motor vehicle fitted with upper ball stops (12) for the front axle suspensions, **characterized in that** each upper stop (12) forms part of a stop system according to any one of the preceding claims.
